# EUROPEAN PATENT APPLICATION

(11) **EP 0 808 566 A2**
(43) Date of publication of application: **26.11.1997**
(21) Application number: 97107702.9
(22) Date of filing: 12.05.1997
(51) Int. Cl.: A01K 5/01, A47G 23/06

(54) **Service unit for small pets**

(30) Priority: 21.05.1996 IT BO960280
(71) Applicant: Gialloblu S.r.l., 40013 Castelmaggiore (Prov. of Bologna) (IT)
(72) Inventor: Agostoni, Egidio, 40069 Zola Predosa (Prov. of Bologna) (IT); Roncaglia, Matteo, 40067 Rastignano (Prov. of Bologna) (IT); Vandini, Aldo, 40123 Bologna (IT)
(74) Representative: Modiano, Guido, Dr.-Ing.

(57) **Abstract**

The service unit for small pets comprises a tray wherein a plurality of compartments (2,17,18,19,20,21) of different shapes is formed; the compartments are open upwards and are adapted to accommodate complementarily shaped removable containers (3,30) meant to be discarded after use. A first compartment (2), affecting substantially half of the tray, is meant to contain the excrement of the pet and is provided with a corresponding cover (4), additional compartments (19,20,21) being meant to contain respective kinds of food.

## Description

The present invention relates to a service unit for small pets, such as cats and small dogs.

Usually hygiene and food requirements of household cats in particular, are generally taken care of by using a plurality of tools, often not provided specifically for this purpose.

For example, to provide cats with the food they require, bowls, saucers and the like placed directly on the floor are mainly used.

This entails considerable hygiene problems, since these appliances should be removed and cleaned of their waste immediately after use. Obviously, these hygiene problems are particularly significant in the case of excrement and other organic waste of the cat, which are also collected usually in makeshift containers, preferably provided with granular absorbent substances.

Retention of the waste in the above-described appliances for a prolonged period of time in fact generates bad odors and can lead to degradation of living spaces. On the other hand, it is evident that frequent cleaning requires an amount of time and work which is not always available.

A principal aim of the present invention is to solve the described problem by providing a service unit allowing to meet the basic hygiene and food requirements of small pets, ensuring a high level of cleanliness.

Within the scope of this aim, an object of the present invention is to provide a service unit for small pets which is simple in concept, compact, safely reliable in operation and versatile in use.

This aim and this object are both achieved, according to the invention, by the present service unit for small pets, characterized in that it comprises at least one tray wherein a plurality of compartments of different shapes is formed, said compartments being open upwards and being adapted to accommodate complementarily shaped removable containers meant to be discarded after use.

The details of the present invention will become apparent from the following detailed description of a preferred embodiment of the service unit for small pets, illustrated only by way of non-limitative example in the accompanying drawings, wherein:
figure 1 is a plan view of the service unit for small pets according to the present invention;
figure 2 is a vertical sectional view of said service unit, taken along the vertical plane II-II of figure 1 and with some parts shown in exploded view;
figures 3, 4, and 5 are respective enlarged-scale sectional views of details of said unit, taken along the planes III-III, IV-IV and V-V of figure 1;
figure 6 is an axonometric view of the service unit according to the invention.

With particular reference to the above figures, the reference numeral 1 generally designates the service unit, according to the present invention, for small pets such as cats and small dogs. Said unit is substantially constituted by a tray, produced by molding plastic material, wherein a plurality of compartments of various shapes, meant for different uses and open upwards, is formed.

More particularly, said tray has a first larger compartment or litter 2, affecting substantially half of said tray and meant to contain the excrement of the pet. The compartment 2 is substantially rectangular, with an outer corner which is chamfered so as to form an oblique portion, and is relatively deep.

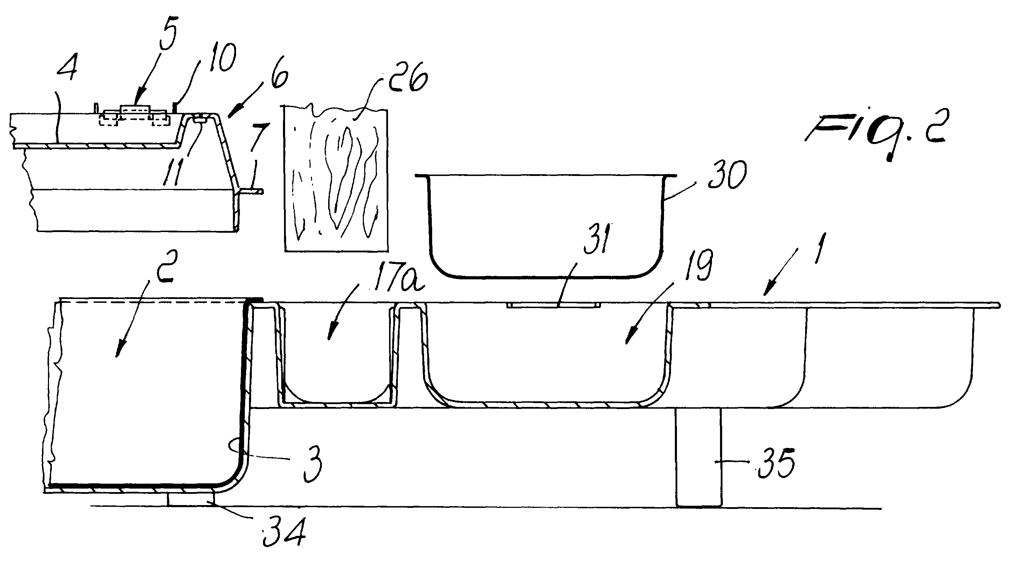

Actually, the compartment 2 is adapted to accommodate a complementarily shaped removable container 3, made of thin and light plastics and is meant to be discarded after use (figure 2).

The compartment 2 is closed by a complementarily shaped cover 4 formed by molding plastic material, which is hinged along one of its shorter sides, through a pair of hinge elements 5, to a frame 6 adapted to engage in the compartment 2 with its lower rim clamping the removable container 3. The frame 6 forms a peripheral ridge 7 which is directed outwards and wherethrough it rests on the upper rim of the compartment 2.

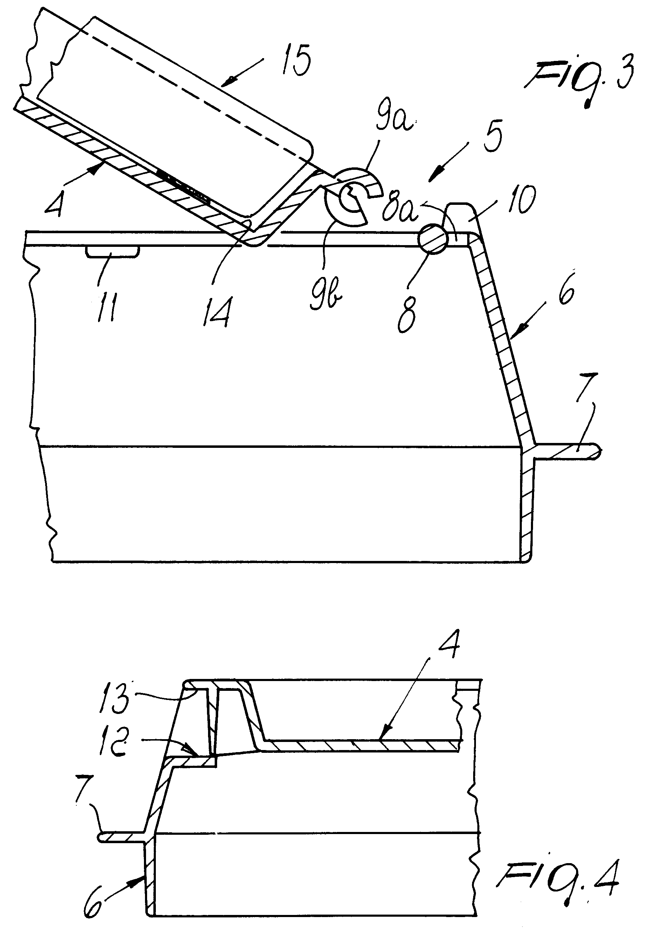

The hinge elements 5 include a pivot 8, formed by the frame 6 along a horizontal axis; said pivot 8 is adapted to be engaged by engagement elements 9a and 9b shaped complementarily thereto and formed by the cover 4 (see figure 3). In particular, said engagement elements include a central upper engagement element 9a and two lateral lower engagement elements 9b; the engagement element 9a passes through a corresponding slot 8a formed on the frame 6 and adjacent to the pivot 8.

Two flaps 10 also protrude from the frame 6, to the sides of the hinge elements 5, and are adapted to act as stroke limiters when the cover 4 is opened.

The cover 4 rests, in closed position, on a plurality of teeth 11 protruding inwards from the upper rim of the frame 6.

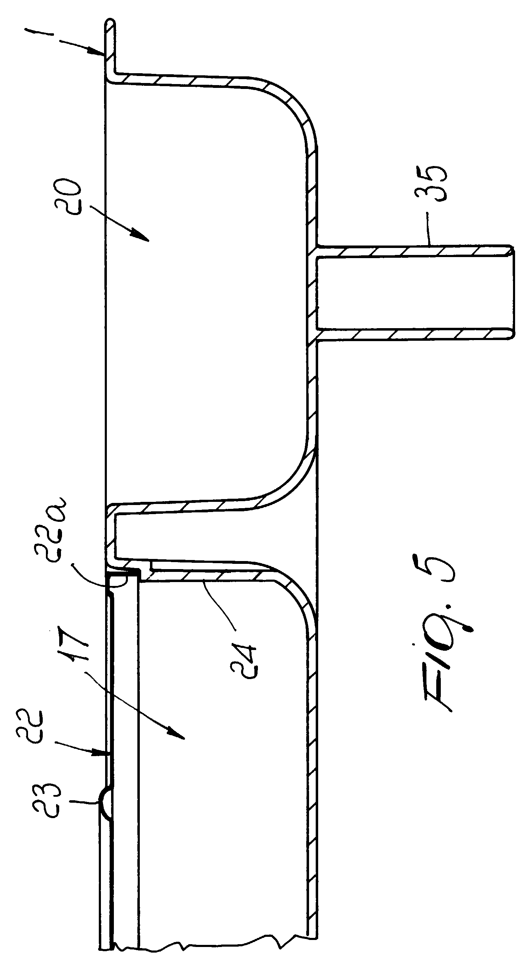

In order to open the cover 4, the frame 6 has, substantially on the opposite side with respect to the hinge elements 5, an opening 12 whereat said cover 4 forms a protrusion 13 adapted to be gripped (see figure 4).

The cover 4 has a depressed portion 14 affecting substantially its entire surface. This depressed portion 14 conveniently forms the seat for an adapted cushion 15, indicated in dashed lines in figure 3. Said cushion is conveniently fixed to the bottom of the cover 4 by means of strips 16 made of quick-coupling textile material known by the trade-name Velcro.

The remaining half of the tray 1 is approximately trapezoidal and has a second compartment 17 and a third compartment 18 in an inner region which is adjacent to the first compartment 2; the compartment 17 is meant to contain a plurality of accessories and cleaning tools such as brushes and the like, whilst the compartment 18 is meant to contain planted grass, particularly the medicinal grass known as catnip; further compartments 19, 20 and 21 of the remaining half of the tray are meant to contain respective kinds of food for the pet.

Said compartments 17, 18 and 19, 20, 21 are shallower than the first compartment 2; in practice, they are half as deep.

The second compartment 17 has an irregular shape and is closed by a cover 22 preferably made of stainless steel and provided with a plurality of cambered regions 23 distributed along parallel rows. The shape of the cover 22 corresponds to the shape of the compartment 17, and the cover rests along a folded rim 22a on a plurality of vertical ridges 24 formed on the side walls of said compartment 17 (figure 5).

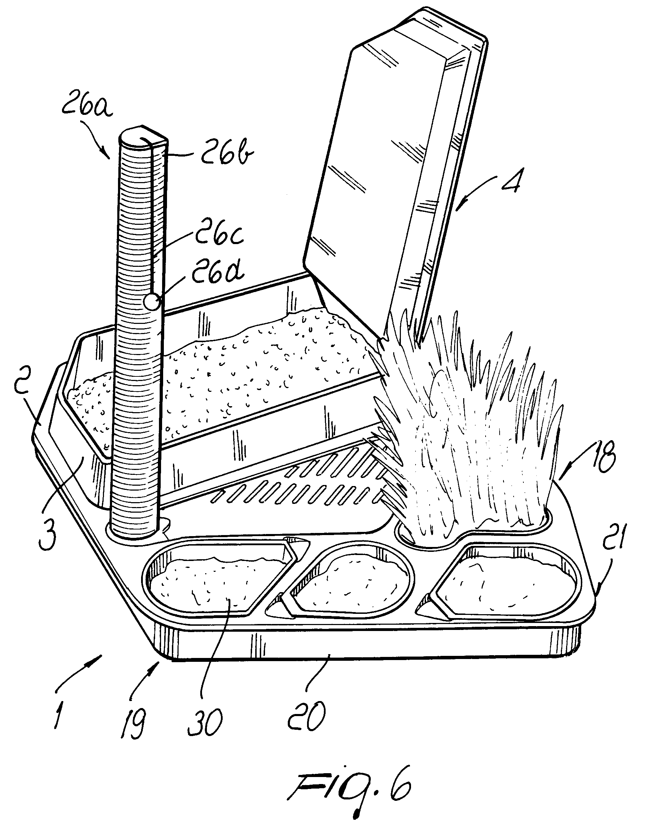

The cover 22 is provided, at its edge, with an opening 25 meant to facilitate the extraction of said cover. At the opening 25, the compartment 17 forms a seat 17a for optionally inserting (figure 2) an upright element 26 intended for the pet to sharpen his claws or bite thereon. The element 26 may be made of various materials, for example of wood, cord-covered wood or cardboard. As shown in figure 6, a preferred element 26 is constituted by a tubular element 26a, made of plastic material with a cord 26b laid spirally thereon; the cord ends upwards with a free length 26c at the end whereof a small ball 26d, which can be inserted inside the tubular element 26a, hangs.

The third compartment 18 has an irregular shape and is in turn closed by a corresponding cover 27 preferably made of stainless steel. The cover 27 has a plurality of slots 28 distributed along rows parallel to the cambered regions 23 of the cover 22; the catnip is meant to protrude through the slots 28.

The cover 27 rests, along a folded rim, on a plurality of vertical ridges formed on the side walls of the compartment 18, not shown in the drawing. The cover 27 is provided, at its edge, with an opening 29 meant to facilitate its extraction.

The compartment 18 is adapted to accommodate a detachable and complementarily shaped container, not shown, made of thin and light plastic material and meant to contain said catnip seeds.

The compartments 19, 20 and 21 for food are in turn adapted to accommodate respective removable containers 30 shaped complementarily, are made of thin and light plastic material, and meant to be discarded after use (figure 2). In order to facilitate the removal of said containers 30, the surface of the tray 1 has corresponding depressed regions 31, 32 and 33 next to said compartments 19, 20 and 21.

Finally, the tray 1 is provided, in a downward region, with supporting feet 34 and 35. In particular, below the first compartment 2 there are four feet 34, which are distributed proximate to the corner regions of said compartment, and there is at least one foot 35 arranged below the compartment 20 on the opposite side of the tray. The foot 35 is of course conveniently higher than the feet 34 so as to compensate for the different depth of said compartments 2 and 20.

Operation of the service unit is easily understandable from the above description.

The described service unit combines all that is necessary for basic hygiene and food requirements of small animals, particularly cats, in a single compact-size tray.

In particular, the first compartment 2 of the tray or litter allows, after opening the cover 4, to collect the organic waste of the pet inside the removable container 3, which is conveniently filled with conventional granular absorbent material.

Said container 3 is subsequently removed and discarded, so as to keep the tray clean without requiring washing and the like.

In closed position, the cover 4, preferably provided with a cushion 15, is a seat whereon the animal can stay even for long periods.

The second compartment 17 constitutes, as mentioned, a container for the pet cleaning accessories, which can be accessed after opening the corresponding cover 22. The element 26 meant for the pet's nail sharpening and possibly for playing when the ball 26d is not inserted inside the tubular element 26a, but hanged externally thereto, can also protrude vertically from the compartment 17.

Tufts of catnip sown inside a corresponding removable container protrude from the slots 28 of the cover 27 of the third compartment 18. Of course, when all the catnip has been used up by the animal, said container containing the loam for sowing is removed and replaced.

The additional compartments 19, 20 and 21 are instead meant to contain, inside respective removable containers 20, the various kinds of food usually making up the diet of the cat. In this case, too, the containers 30 are obviously removed and discarded after use, so as to avoid cleaning the tray.

The described device therefore allows to keep the tray constantly clean by using thin, light and flexible containers made of plastics meant to be discarded after use, without requiring washing and the like.

The tray has a compact shape and occupies a very small space. In particular, during transport, the cover 4 and the associated frame 6 can be removed from the first compartment 2 and arranged in the package below the tray portion forming the compartments 17, 18 and 19, 20 and 21.

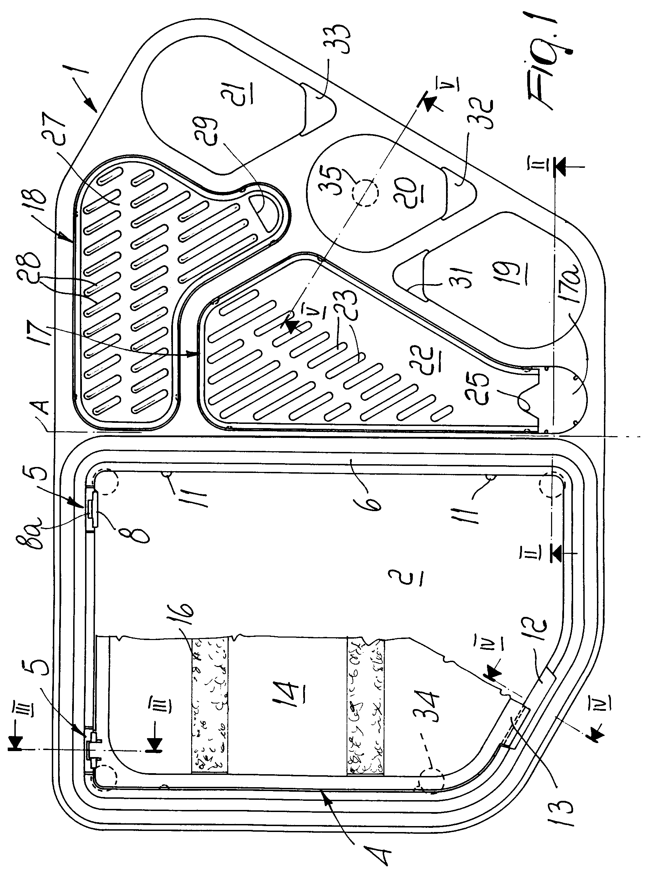

It should be noted that it is possible to provide the tray in two separate parts, dividing said tray substantially along the median axis, designated by A in figure 1. In practice, the tray portion containing the pet food and the cleaning tools is separate, in this version, from the tray portion meant to contain the organic waste.

Obviously, in this case there is a plurality of feet 35 distributed conveniently to support the tray portion containing the food.

In the practical embodiment of the present invention, the materials employed, as well as the shapes and the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A service unit for small pets, such as cats and small dogs, characterized in that it comprises at least one tray wherein a plurality of compartments (2,17,18,19,20,21) of different shapes is formed, said compartments being open upwards and being adapted to accommodate complementarily shaped removable containers (3,31) meant to be discarded after use.

2. A service unit according to claim 1, characterized in that said tray has at least one compartment or litter (2) meant to contain the excrement of the pet, adapted to accommodate a container (3) which is removable and complementarily shaped, and closed by an associated and correspondingly shaped cover (4).

3. A service unit according to claim 2, characterized in that said cover (4) is hinged along one side to a frame (6) which is adapted to engage said compartment (2) with its lower rim, clamping said removable container (3) at the edge.

4. A service unit according to claim 2, characterized in that said cover (4) has a depressed portion (14) affecting substantially the entire surface thereof and adapted to form the seat for a corresponding cushion (15).

5. A service unit according to claim 1, characterized in that said tray has at least one pair of compartments (17,18) closed by respective covers (22,27) and meant to contain, respectively, cleaning accessories and planted grass, particularly catnip, and further open compartments (19,20,21) adapted to accommodate respective removable and complementarily shaped containers (30) meant to contain food for the pet.

6. A service unit according to claim 5, characterized in that said covers (22,27) are shaped so as to match said corresponding compartments (17,18) and are adapted to rest, along a folded rim (22a), on a plurality of vertical ridges (24) formed on the side walls of said compartments, said covers having, at their edge, an opening (25,29) meant to facilitate removal from said compartments (17,18).

7. A service unit according to claim 1, characterized in that said tray has a compartment (17) meant to contain cleaning accessories and closed by a cover (22) having, at its edge, an opening so as to form a seat (17a) for inserting an upright element (26) meant to allow the pet to sharpen its claws.

8. A service unit according to claim 1, characterized in that said upright element (26) is constituted by a tubular element (26a), a cord (26b) being laid spirally on said tubular element (26a), said cord ending upwardly with a free length (26c), a ball (26d) being further provided at a free end of said length (26c), the ball (26d) being adapted for being inserted inside said tubular element (26a).

9. A service unit according to claim 1, characterized in that said tray has a compartment (18) meant to contain planted grass and closed by a cover (27) having a plurality of uniformly distributed slots (28) through which said grass is meant to protrude.

10. A service unit according to claim 1, characterized in that said tray is provided, in a downward region, with supporting feet (34,35) protruding below said compartments (2,20).
